# EUROPEAN PATENT APPLICATION

(11) **EP 4 726 355 A1**
(43) Date of publication of application: **15.04.2026**
(21) Application number: 25207847.2
(22) Date of filing: 09.10.2025
(51) Int. Cl.: G01N 3/00

(54) **LAMINAR MATERIAL TEST COUPON**

(30) Priority: 09.10.2024 ES 202430812
(71) Applicant: Airbus Operations, S.L.U., 28906 Getafe (Madrid) (ES)
(72) Inventor: REBOLLO DABO, Sergio, 28906 Madrid (ES); RODRÍGUEZ SÁNCHEZ, José Antonio, 28906 Madrid (ES)
(74) Representative: ABG Intellectual Property Law, S.L.

(57) **Abstract**

The invention relates to a test coupon (10) that is suitable for the mechanical testing of a laminar material, comprising at least three regions:
an outer region (1) comprising a first portion (E1) which in turn comprises two first ends (1a, 1b) which are opposite each other along the longitudinal axis (L); an inclined region (2) contiguous with the outer region (1) and comprising at least two first ramps (2a), in which each of the first ramps (2a) extends along the longitudinal axis (L) from each of the first ends (1a, 1b) towards a central region (3); and the central region (3) which is arranged in the longitudinal axis (L) between the two first ramps (2a) and comprises a second portion (E2), in which the thickness of the second portion (E2) is less than the thickness of the first portion (E1).

## Description

### SUBJECT OF THE INVENTION

The present invention relates to a test coupon; specifically, the coupon is made of a laminar material such as a composite material and is intended for mechanical testing.

### BACKGROUND OF THE INVENTION

A coupon is a small sample of a larger test material. Testing larger materials or products can be expensive and complex, which is why testing sample coupons is an effective and more economical alternative.

Technicians generally prepare a sample piece or coupon so that its properties are representative of the entire material, and then subject that sample piece to various mechanical tests to study how it behaves.

Typical mechanical tests performed on sample pieces or coupons include: tensile strength, compression, material hardness, microhardness, impact strength, friction resistance, three-point bending, shear, deformation and wear resistance tests under various environmental conditions.

Generally, sample pieces or coupons are standardized and have common geometries and shapes depending on the tests to be performed. This is because controlled coupon geometric parameters are achieved and, thus, the calculation of material's characteristics is simple and accurate. There are different types of standardized coupons, depending on their shape: round body with threaded head or smooth head, flat body with or without head, etc.

An example of these samples or coupons is described in the publication ES 2 941 696 T3, which describes a fibre composite material tensile sample, a corresponding manufacturing process and a method for performing a tensile test.

For the specific test on thickness variations in certain materials or pieces (also called a fabric failure or shear ramp test), a coupon or sample piece with a specific, simple geometry (i.e. a flat geometry with a single ramp aligned with the main direction of the load) is normally used.

The ramp study in a composite material is the analysis of the termination of certain plies within a composite laminar material. This study is important for minimizing the interlaminar stresses generated at these terminations. To achieve the desired reduction in ply thickness and ensure a smooth transition, the termination of the fabrics is staggered over a certain length, creating a single ramp zone with a given slope.

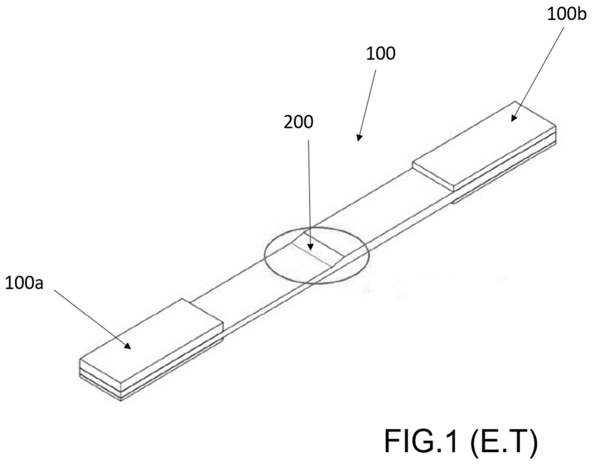

For this reason, the geometry generally used in coupons to simulate this behaviour of the fabric failure of the material is the one mentioned previously, a flat body with a single ramp aligned with the main direction of the load, as shown in Figure 1.

However, this simplified configuration, where the ramp extends from one side to the other, or in other words, from one free end to the other free end of the coupon body, can induce early failures when subjected to testing, due to an additional stress peak caused by the interaction between the curvature of the ramp and these free ends. For this reason, this coupon geometry fails to realistically simulate or represent actual components, such as those found in aircraft, where thickness transitions or ramps are located far from the free edges of the structure.

The early failures observed during tests with this type of coupon can invalidate the analysed results or introduce unrealistic or simply erroneous data or conclusions into the design under study.

For all the above reasons, the object of the invention is to propose a novel concept or configuration of test coupon to study the effect of ply drop-off in composite materials, intended for use in the aviation sector.

### DESCRIPTION OF THE INVENTION

The present invention proposes a solution to the above problems by means of a novel test coupon concept according to claim 1 and a method for mechanical testing of a laminar material according to claim 15. Preferred embodiments of the invention are defined in the dependent claims.

A first inventive aspect provides a test coupon that is suitable for the mechanical testing of a laminar material, in which said test coupon extends along a longitudinal axis and along a transverse axis perpendicular to the longitudinal axis and a thickness, in which the test coupon comprises at least three regions:
- an outer region comprising at least a first portion which in turn comprises two first ends opposite each other along the longitudinal axis,
- an inclined region contiguous with the outer region and comprising at least two first ramps, in which each of the first ramps extends along the longitudinal axis from each of the first ends towards a central region,
- the central region is arranged on the longitudinal axis between the two first ramps and comprises a second portion, in which the thickness of the second portion is less than the thickness of the first portion,
in which the outer region surrounds the inclined region and the central region along their perimeter.

Throughout the present document, the "test coupon" shall be understood to be a piece of laminar material that extends in three directions: the longitudinal axis and the transverse axis, which are perpendicular to each other in an elevation plane, and the thickness axis in the plane perpendicular to the elevation plane. Thus, the test coupon is a piece that is subjected to mechanical testing to analyse and study how the material behaves under certain conditions. In preferred embodiments, the laminar material is a ply with fibres arranged in one or more orientations. Examples of laminar materials within the context of the present invention may be composite materials, for example those comprising plies of carbon fabric embedded in resin.

"Mechanical tests" are understood to be any test designed to determine the mechanical properties of materials, such as strength, ductility, hardness and toughness. These tests help to predict how a material will react under different types of forces or load conditions. Mechanical tests specifically include the fabric failure or shear ramp test, i.e. the behaviour of the material in areas where the thickness of the ply varies.

In this specific embodiment, the thickness refers to the total set of plies that make up the laminar material, or in other words, the thickness of the material in the direction of stacking of the plies.

The outer region of the test coupon comprises a first portion of straight thickness (i.e. not inclined along the longitudinal and/or transverse axis) which is a perimeter region relative to the inclined and central region. Also, the first portion comprises at least two free ends opposite each other on the longitudinal axis. The free ends comprise a load introduction zone configured to be held by the testing machines, i.e. it is the zone where the load is to be applied for the different tests.

It shall therefore be understood that the outer region surrounds the inclined region and the central region along their perimeter, and thus, it is understood that the first portion surrounds the second portion along its perimeter.

Throughout the present patent application, "opposite ends" shall be understood to mean two ends separated from each other along a certain axis.

Throughout the patent application, it shall be understood that the application of load for the coupon test takes place at the free ends of the coupon, i.e. along the longitudinal axis.

The first ends of the outer region are defined as the ends that delimit the inclined region, i.e. where the first portion of the outer region ends and the inclined region begins. The first ends are opposite along the longitudinal axis and the second ends are opposite along the transverse axis.

Thus, the free ends and the first ends are located on the longitudinal axis, with one free end and one first end opposite each other with respect to the transverse axis to the first end and free end, respectively.

The inclined region is located between the first ends of the outer region and the central region and comprises at least two ramps in the longitudinal direction, both descending from the first ends towards the central region.

The central region comprises a second portion between the at least two longitudinal ramps of the inclined region. In addition, the thickness of the second portion of the central region is less than the thickness of the first portion of the outer region, with the difference in thicknesses determining the direction of inclination of the ramps of the inclined region.

In the zone near the start of a ramp, interlaminar stresses arise from the terminations of the plies and the drop-off in thickness. In these locations, high interlaminar stresses occur that can cause the appearance of interlaminar defects, such as delaminations. A similar effect occurs near a free edge or end, generating local interlaminar stresses that can also create delaminations.

Thus, the double ramp coupon configuration that does not terminate at a free edge or end more accurately represents the stress behaviour of real aircraft structures. In addition, it avoids the unrealistic stress peak caused by the interaction of the ply drop-off with the free edges, as occurs in existing test pieces or coupons.

The main advantage of the proposed solution is that the delaminations generated in both zones are isolated. Unlike the common approach, in which a coupon comprises a single ramp from one free end to the other and the two effects combine, causing premature failure in sample pieces or coupons, by virtue of this new configuration, more accurate results closer to real configurations can be obtained, specifically in aviation.

In a particular embodiment, the first portion also comprises two second ends opposite each other along the transverse axis and in which the inclined region comprises at least two second ramps, where each of the second ramps extends in the transverse axis from each of the second ends towards the central region.

Advantageously, this configuration allows the coupon to comprise a double ramp in the longitudinal direction and another double ramp in the transverse direction, allowing greater flexibility of geometries and designs in the tests, since the ramps in the longitudinal direction (first ramps) can occur alone or in combination with the ramps in the transverse direction (second ramps).

In this configuration with ramps in the longitudinal direction and ramps in the transverse direction, the first and second ends of the outer region are the ends that delimit the inclined region, i.e. where the first portion of the outer region ends and the inclined region begins. In addition, the first and second ends are opposite each other in pairs, with opposite meaning that the first ends are separated on the longitudinal axis and the second ends are arranged on the transverse axis.

Thus, the first and second ends delimit the inclined region, so that none of the ramps extend to the free ends of the coupon, but rather extend from the first and second ends to the central region.

Advantageously, by eliminating the interaction between the free edges and the inclination of the ramps, more representative results are obtained. This is particularly the case for this type of test, such as analysing the fabric failure zone in which there is a transition in the thickness of the laminar material.

Another advantage is the added flexibility to be able to study several different geometric combinations, for instance varying the slopes in the longitudinal and/or transverse direction, the length of all or some of the ramps, or the cutting pattern in both or either direction.

By virtue of all the foregoing, it is possible to achieve a coupon geometry that is more representative of the real components of an aircraft and obtain more reliable results.

In another particular embodiment, the test coupon is symmetrical with respect to the longitudinal axis.

Additionally, in another embodiment, the test coupon is symmetrical with respect to the transverse axis (T).

Thus, the fact that the coupon can be symmetrical with respect to a longitudinal or transverse axis, or both at the same time, offers the advantage of being a very versatile coupon when analysing and studying different geometries.

In other embodiments, the thickness of the first and/or second portion of the test coupon is constant. This means that in these embodiments, the inclined region comprises at least two ramps and the outer and central regions are flat.

Advantageously, in these embodiments, the outer region must be flat, given that the load for testing the coupon is applied at its free ends, i.e. it is a flat surface so that the free ends can be gripped by jaws and the load can be applied.

In another embodiment, the central region also comprises a ramp in the longitudinal direction, resulting in an asymmetrical configuration. This type of configuration is also possible with this coupon.

In certain embodiments, the length and width of the test coupon are determined by the thickness of the laminar material to be tested and by the inclination of the ramps to be studied.

In certain embodiments, the angle of inclination of the first ramps with respect to the longitudinal axis is between 2° and 15°.

The first ramps may have the same angle of inclination or each may have a different angle, which can be varied, allowing for great flexibility when testing how the material behaves with more or less ply detachment.

In other embodiments, the angle of inclination of the second ramps with respect to the transverse axis is between 5° and 20°.

The same applies to the second ramps as to the first ramps, which may or may not have the same angle of inclination.

Both embodiments together afford a more versatile test piece with several possible geometric combinations for testing, allowing for independent variations in the inclination of the ramps in both the longitudinal and transverse directions.

By virtue of the foregoing, it is possible to analyse and test the configuration of the material that will subsequently be used, for example in aviation, with a greater degree of accuracy at a mechanical level.

In particular embodiments, the thickness of the first portion of the outer region is between 4 and 30 mm.

As mentioned previously, the thickness of the coupon is understood to be the thickness of the test material, which will depend on the plies of which the material is composed.

In another embodiment, for example, the thickness of the second portion of the central region (3) is between 2 and 15 mm.

Thus, the maximum and minimum thicknesses of the outer and central regions of the coupon are given by the thickness of each ply and by the plies of the material.

This thickness configuration is a specific and illustrative example used in the aeronautical industry, although the invention is not limited thereto. The central region is generally flat, but it may also have an additional ramp different from the ramps of the inclined region.

In a particular embodiment, the ratio between the thickness of the first portion and the second portion is between 1.5 and 4.

Preferably, in certain embodiments of the invention, this ratio between the thickness of the first portion and the second portion is 2.

Additionally, in other embodiments, the length of the first ramps and/or the second ramps is in the range of 50-100 mm; and/or the width of the first ramps and/or the second ramps is in the range of 50-100 mm.

Having ramps of different dimensions allows for variations in areas that suffer high interlaminar stresses resulting from layer terminations and thickness drop-off. This makes it possible to adapt each test coupon to the most realistic situation that the material it imitates will undergo.

In one particular embodiment, the ratio between the width of the first ramps and the width of the second ramps is between 0.7 and 1.3.

In preferred embodiments of the invention, the width of the central region is uniform. In alternative embodiments, the configuration to be tested has a non-uniform or variable width of the central region, which means that it is not symmetrical with respect to the longitudinal axis and/or the transverse axis. In other words, the configuration of the coupon of the invention can be adapted to each situation and study to be performed.

Furthermore, in other embodiments, the ratio of the length of the central region to the total length of the test coupon is in the range of 0.2-0.5.

In certain embodiments, the ratio of the width of the central region to the total width of the test coupon is in the range of 0.4-0.8.

These configurations allow the test coupon to test the interaction that occurs at the end of the ramps. Thus, the central region is large enough to reproduce the actual stress distribution near the end of the ramp. Since the central region is surrounded by the ramps and the outer region in certain embodiments of the invention, interaction with the free edges of the coupon is eliminated, resulting in behaviour that is closer to reality.

These configurations of the test coupon of the invention are prepared to perform the following tests:
- pure tensile or compression test, to study the effect of the ramp with the desired configuration (angle, cut pattern, etc.) when subjected to uniform loads in the longitudinal plane.
- combined load test, in which the coupon is subjected to a set of loads (for example traction plus shear, compression plus torsion, etc.).
- other types of tests: damage tolerance test, similar to the previous ones, but in which the coupon is first subjected to a controlled impact at a certain energy level to generate internal damage.

The object of the invention is to provide a test coupon that allows any type of test to be performed and that affords a more comprehensive and representative analysis of the behaviour of the material's configuration.

All the features described in the present specification (including the claims, description and drawings) can be combined in any combination, except for combinations of mutually exclusive features.

### DESCRIPTION OF THE DRAWINGS

These and other features and advantages of the invention will emerge more clearly from the detailed description below of a preferred embodiment, given purely as an illustrative and nonlimiting example, with reference to the accompanying figures.
- Figure 1: These figures show a test coupon known in the prior art (P.A.)
- Figures 2a-2b: These figures illustrate different views of the test coupon according to a first embodiment according to the invention.
- Figures 3a-3c: These figures illustrate different views of a second embodiment of the test coupon according to the invention.

### DETAILED DESCRIPTION OF THE INVENTION

Figure 1 shows a test coupon (100) known in the prior art, in which said coupon comprises a single ramp (200) extending along a longitudinal axis from one free end (100b) to another free end (100a).

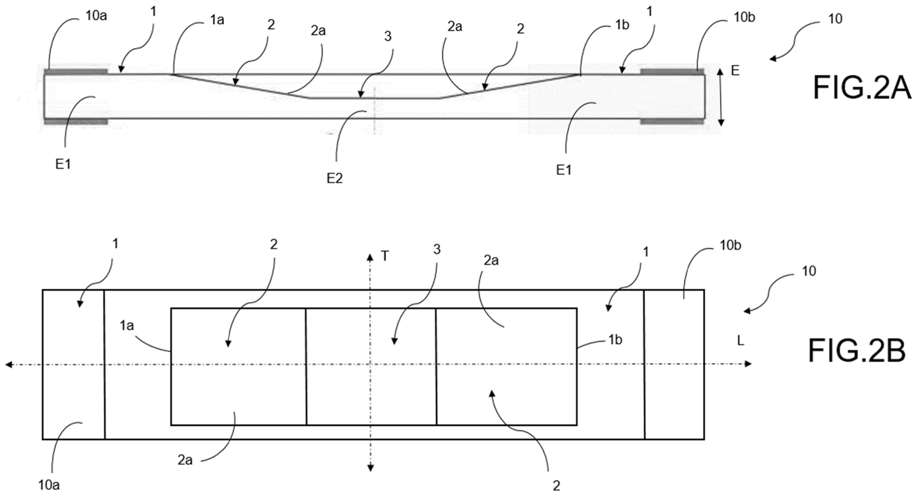

Figures 2a and 2b describe the views of the test coupon (10) of an embodiment of the invention. Specifically, Figure 2a shows a cross-sectional view along a longitudinal axis (L), while Figure 2b is an elevation view of the test coupon (10).

As can be seen in Figures 2a and 2b, the test coupon (10) comprises a longitudinal axis (L) along which it extends and a transverse axis (T) with respect to which the test coupon (10) comprises opposite ends.

Looking at Figures 2a and 2b, it can be seen that the outer region (1) comprises free ends (10a, 10b) opposite each other with respect to the transverse axis (T). At the free ends (10a, 10b) there is a load introduction zone, where the load is applied to test the test coupon (10).

Additionally, it can be seen that the outer region (1) is a perimeter region of the inclined (2) and central (3) regions, which also comprise first ends (1a, 1b). These ends (1a, 1b) delimit the inclined region (2) and are opposite ends along the longitudinal axis and are the boundary zone where the outer region (1) ends and the inclined region (2) begins, as shown in Figure 2b.

Thus, the free ends (10a, 10b) and the first ends (1a, 1b) are located on the longitudinal axis, with one free end (10a) and one first end (1a) located opposite each other with respect to the transverse axis to the first end (1b) and the free end (10b), respectively.

The inclined region (2) is shown in greater detail in Figure 2a, in which it can be seen that the inclined region (2) comprises at least two first ramps (2a), both descending along the longitudinal axis (L). Each of the first ramps (2a) extends from one of the first ends (1a, 1b) to the central region (3).

In Figures 2a and 2b, it can also be seen that the outer region (1) comprises a first portion of thickness E1, while the central region (3) comprises a second portion of thickness E2, where E2 is less than the thickness of the first portion (i.e. E2 < E1). This is because between the first portion of thickness E1 and the second portion of thickness E2 are the first ramps (2a), which may have a variable thickness.

In the specific case of Figures 2a-2b, it can be seen that the first ramps (2a) are symmetrical about the central region (3), i.e. they have the same length, thickness and inclination with respect thereto. Also, in this embodiment, it can be seen that there is mirror symmetry of the invention with respect to the longitudinal axis (L).

However, in alternative embodiments of the invention, the first ramps (2a) distributed along the longitudinal axis (L) are not symmetrical, and one of them may have a different length, thickness, width or inclination with respect to the central region (3) compared to the other first ramp (2a). In other words, in these alternative embodiments, there is no mirror symmetry along the longitudinal axis (L).

The embodiments of the invention that exhibit symmetry provide the advantage of allowing two ramps to be studied for each test coupon. However, the non-symmetrical case also provides benefits, such as the advantage of testing several different configurations on the same coupon at the same time.

However, all these embodiments comprising first ramps (2a) in which the ramps (2a) do not terminate at a free edge or end (10a, 10b) more accurately represent the behaviour of real aircraft structures when loads are applied along the longitudinal axis (L) that generate interlaminar stresses derived from the layer terminations and the thickness drop-off.

In addition, these embodiments manage to avoid the unrealistic peak stresses caused by the interaction of the ply drop-off with the free edges (10a, 10b), unlike what happens in existing sample pieces or coupons (100).

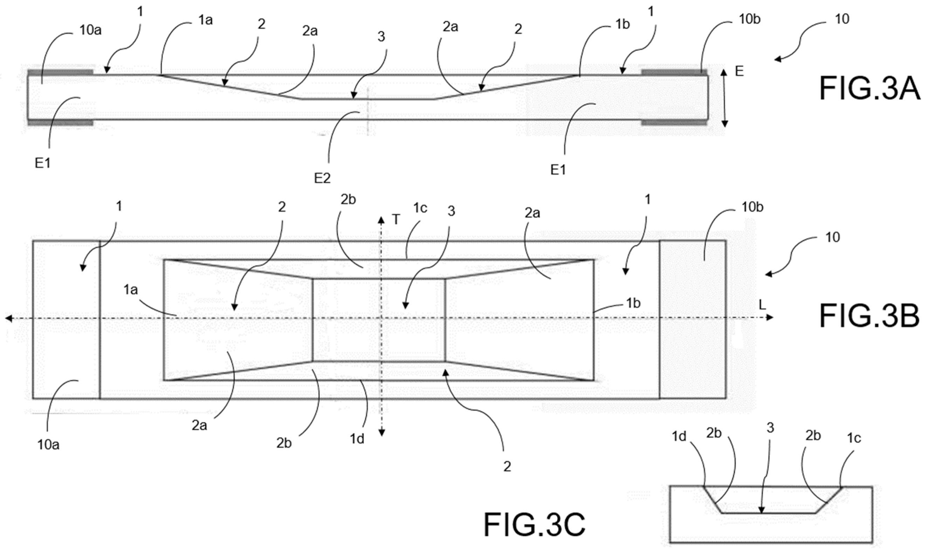

Figures 3a to 3c show another embodiment of the test coupon (10) according to the invention. The difference between this embodiment and that illustrated in Figures 2a and 2b is that the inclined region (2) also comprises two second ramps (2b) on the transverse axis (T).

As in Figures 2a-2c, Figure 3a shows a cross-sectional view along the longitudinal axis (L), Figure 3b is an elevation view, and Figure 3c is a cross-sectional profile view.

In this embodiment, both in Figure 3b and Figure 3c, it can be seen that the outer region (1) also comprises second ends (1c, 1d) from which the second ramps (2b) extend to the outer region (3). These second ends (1c, 1d) are opposite each other along the transverse axis.

In the specific case of Figures 3a-3b, it can be seen that the first ramps (2a) exhibit mirror symmetry with respect to the longitudinal axis (L), i.e. they have the same length, width, thickness and inclination. Likewise, the second ramps (2b) also exhibit mirror symmetry with respect to the transverse axis (T) and have substantially the same length, width, thickness and inclination.

However, in alternative embodiments of the invention, the first ramps (2a) and/or the second ramps (2b) are not symmetrical with respect to the longitudinal (L) and transverse (T) axes, respectively.

These double ramp configurations (2a, 2b) better control the interlaminar stresses generated in both the longitudinal (L) and transverse (T) axes. This more accurately simulates the occurrence of interlaminar defects, such as delaminations in real aviation structures.

These interlaminar stresses occur near a free edge or end (10a, 10b). Thus, since these double ramp coupon configurations do not terminate at a free edge or end (10a, 10b), they more accurately represent the behaviour of the material and avoid the unrealistic peak stresses caused.

### Specific embodiment example

In a specific example of the test coupon (10) of the invention, the test coupon (10) comprises longitudinal and transverse symmetry, with the dimensions specified below.

The outer region (1) comprises a first portion (E1) with a thickness of 10.16 mm, a length from a free end to the inclined region of 300 mm, and the width of said outer region (1) is 200 mm.

The inclined region (2) comprises two first ramps (2a) in the longitudinal direction with an inclination of 1:20 or 2.86° and two second ramps (2b) in the transverse direction with an inclination of 1:10 or 5.7°.

The two first ramps (2a) have a length of 101.6 mm and a variable width from the outer region (1) to the central region (3), in which the initial width in the outer region (1) is 100 mm, while the final width in the central region (3) is 75 mm.

The second two ramps (2b) have a length of 50.8 mm and a variable width from the outer region (1) to the central region (3), in which the initial width in the outer region (1) is approximately 400 mm, while the final width in the central region (3) is approximately 200 mm.

The central region (3) of the test coupon (10) in the specific example comprises a second portion (E2) with a thickness of 5.08 mm, a length of 200 mm and a width of 75 mm.

Thus, in this embodiment, the ratio of the thicknesses of the first and second portions (E1, E2) is 2, as in the abovementioned preferred case.

The test coupon (10) of the specific example is subjected to different tests and trials such as: a pure tensile test until the coupon breaks, an extensometry trial installed in the ramp zone to measure deformations during the test and to determine the local stress peaks, the failure initiation zone and the final failure.

## Claims

1. Test coupon (10) that is suitable for the mechanical testing of a laminar material, in which said test coupon (10) extends along a longitudinal axis (L), along a transverse axis (T) perpendicular to the longitudinal axis (L) and along a thickness (E), in which the test coupon (10) comprises at least three regions:
- an outer region (1) comprising at least a first portion (E1) which in turn comprises two first ends (1a, 1b) opposite each other along the longitudinal axis (L),
- an inclined region (2) contiguous with the outer region (1) and comprising at least two first ramps (2a), in which each of the first ramps (2a) extends along the longitudinal axis (L) from each of the first ends (1a, 1b) towards a central region (3),
- the central region (3), which is arranged on the longitudinal axis (L) between the two first ramps (2a) and comprises a second portion (E2), in which the thickness of the second portion (E2) is less than the thickness of the first portion (E1),
in which the outer region (1) surrounds the inclined region (2) and the central region (3) along their perimeter.

2. Test coupon (10) according to Claim 1, in which the first portion (E1) comprises two second ends (1c, 1d) opposite each other along the transverse axis (T) and in which the inclined region (2) comprises at least two second ramps (2b), in which each of the second ramps (2b) extends along the transverse axis (T) from each of the second ends (1c, 1d) towards the central region (3).

3. Test coupon (10) according to either of the preceding claims, in which the test coupon (10) is symmetrical with respect to the longitudinal axis (L).

4. Test coupon (10) according to any one of the preceding claims, in which the test coupon (10) is symmetrical with respect to the transverse axis (T).

5. Test coupon (10) according to any one of the claims, in which the thickness of the first and/or second portion (E1, E2) is constant.

6. Test coupon (10) according to any one of the preceding claims, in which the angle of inclination of the first ramps (2a) with respect to the longitudinal axis (L) is between 2° and 15°.

7. Test coupon (10) according to any one of the preceding claims, in which the angle of inclination of the second ramps (2b) with respect to the transverse axis (T) is between 5° and 20°.

8. Test coupon (10) according to any one of the preceding claims, in which the thickness of the first portion (E1) of the outer region (1) is between 4 and 30 mm.

9. Test coupon (10) according to any one of the preceding claims, in which the thickness of the second portion (E2) of the central region (3) is between 2 and 15 mm.

10. Test coupon (10) according to any one of the claims, in which the ratio between the thickness of the first portion (E1) and the second portion (E2) is between 1.5 and 4.

11. Test coupon (10) according to the preceding claim, in which the ratio between the thickness of the first portion (E1) and the second portion (E2) is 2.

12. Test coupon (10) according to any one of the preceding claims, in which the length of the first ramps (2a) and/or the second ramps (2b) is in the range of 50-100 mm.

13. Test coupon (10) according to any one of the preceding claims, in which the width of the first ramps (2a) and/or the second ramps (2b) is in the range of 50-100 mm.

14. Test coupon (10) according to any one of the preceding claims, in which the ratio of the length of the central portion (3) to the total length of the test coupon (10) is in the range of 0.2-0.5.

15. Test coupon (10) according to any one of the preceding claims, in which the ratio of the width of the central portion (3) to the total width of the test coupon (10) is in the range of 0.4-0.8.
